Europäisches Patentamt

European Patent Office

Office européen des brevets

(11) Publication number: **0 489 365 A1**

# EUROPEAN PATENT APPLICATION

(21) Application number: **91120504.5**

(22) Date of filing: **29.11.91**

(51) Int. Cl.⁵: **G11B 23/44**, G11B 31/00

(30) Priority: **01.12.90 KR 1975090**
**18.01.91 KR 83291**
**18.05.91 KR 812491**

(43) Date of publication of application:
**10.06.92 Bulletin 92/24**

(84) Designated Contracting States:
**DE FR GB**

(71) Applicant: **SAMSUNG ELECTRONICS CO. LTD.**
**416 Maetan-Dong, Kwonsun-ku**
**Suwon, Kyunggi-do(KR)**

(72) Inventor: **Lee, Kyu-an**
**50-3, Kodeung-dong, Kwongsun-ku**
**Suwon, Kyunggi-do(KR)**

(74) Representative: **Patentanwälte Grünecker,**
**Kinkeldey, Stockmair & Partner**
**Maximilianstrasse 58**
**W-8000 München 22(DE)**

(54) **Cassette player having a detached character information display unit.**

(57) Disclosed is a cassette player (100) having a detached character information display unit (200), and that includes a main unit to reproduce audio and character information and character information display unit for displaying character information in which a jack is used to separate the main unit and the character information display unit by wire and by adding a transmitter section to the main unit and a receiver section to the character information display unit, the main unit and character information display unit can be separated by a radio link.

**FIG. 5B**

**FIG. 2B**

EP 0 489 365 A1

The present invention generally relates to a cassette player having a detached character information display unit in an apparatus to reproduce both audio and video information signals recorded in separate regions on the same recording medium and more particularly, to a cassette player of which a character information display unit can be separated from the main unit of the cassette player by either a radio or wire link.

Ordinarily, in a 2 channel stereo tape, audio signals and character information are recorded separately on each channel. The audio signals recorded on this tape are reproduced through the first channel head to output the reproduced audio signals to speakers head and the character information such as characters or numerals are reproduced through the second channel head simultaneously to display the character information on a liquid crystal screen, monitor or other such character information display unit.

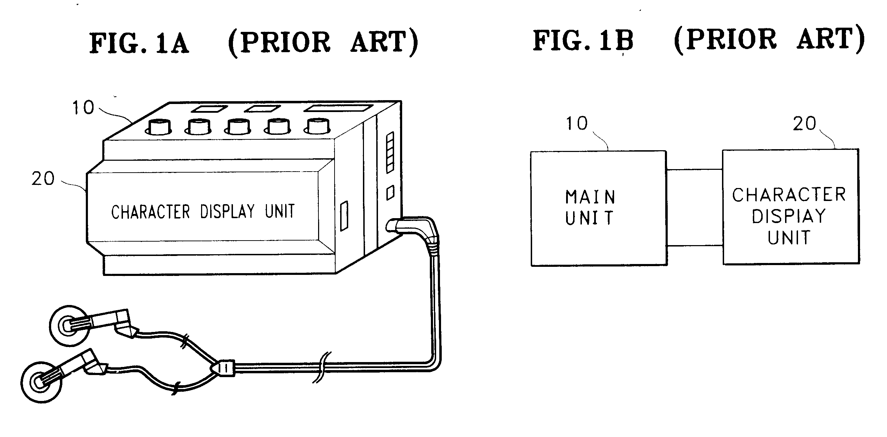

In the prior art, a cassette player is disclosed in Republic of Korea Patent application No. 89-17133 wherein the cassette player is formed with a character information display unit attached as a single unit at the front side of the main body thereof as illustrated in FIG. 1. However, to display 20 characters per line as two lines on the liquid crystal display (hereinafter referred to as LCD) panel of the character information display unit 20, it became a medium size due to the many peripheral circuits and size of the LCD and hence, there is a problem that it could no longer be appropriately mounted on a small size portable cassette player.

In order to overcome the above described problem, it is therefore an object of the present invention to provide a cassette player having a main unit for reproducing audio and character information, and a character information display unit that is detached from the main unit for displaying character information.

Another object of the present invention is to provide a cassette player whose main unit reproduces audio and character information and whose character information display unit can be separated from the main unit by wire for displaying character information.

Yet another object of the present invention is to provide a cassette player whose main unit reproduces audio and character information and whose character information display unit can be separated by a radio link from the main unit for displaying character information.

To achieve the above described objects of the present invention, there is provided a cassette player which reproduces audio and character information signals from an audio tape in which an audio signal has been recorded on a first track and character information signal has been recorded on a second track to output the reproduced audio signal through an audio output section and to display the reproduced character information signal through a character processing section on a flat panel display device, the cassette player comprising;

a main unit of the cassette player; and

a separate character information display unit including the character processing section, flat panel display device, speakers and a power supply section for supplying power to the character processing section, the flat panel display device and speakers and which is detached from the main unit of the cassette player, wherein the separate character information display unit is connected with the main unit by a wire jack and receives the reproduced character information signal and the audio signal, respectively.

There is also provided a cassette player having a detached type character information in which a main unit reproduces audio and character information signals from an audio tape on which audio signals have been recorded on a first track and character information signals have been recorded on a second track, to output the reproduced audio signal through an audio output section and to display the reproduced character information signal through a character processing section on a flat panel display device, the above cassette player comprising:

a main unit of said cassette player having a transmitter section for frequency-modulating the reproduced audio and character information signals and transmitting the frequency-modulated signals through an antenna; and

a separate character information display unit having a receiver section for receiving and frequency-modulating the signals transmitted from the transmitter section, and separating and outputting the audio and character information signals, the character processing section and the flat panel display device for inputting and displaying the character information signals separated in the receiver section, a power supply section for supplying power to the receiver section, the character processing section and the flat panel display device, and an earphone connection jack for outputting the audio signals separated in the receiving section, wherein the separate character information display unit is detached from the main unit of the cassette player, and connected to the main unit by radio, thereby receiving the received character information and audio signals.

FIG. 1A pictorially represents a conventional cassette player which is undetachably formed with a character information display unit.

FIG. 1B is a block diagram of a cassette player shown in FIG.1A;

FIG. 2A pictorially represents a cassette player having a detached character information display unit which is connected to the main unit by wire according to the present invention;

FIG. 2B is a block diagram of a cassette player shown in FIG.2A;

FIG. 3A is a block diagram showing an embodiment of the main unit of the cassette player shown in FIG.2B;

FIG. 3B is a block diagram of another embodiment of the main unit of the cassette player shown in FIG. 2B;

FIG. 4 is a detailed block diagram showing an embodiment of a character information display unit shown in FIG. 2B;

FIG. 5A pictorially represents a cassette player having a detached character information display unit which is connected to the main unit by radio according to the present invention;

FIG. 5B is a block diagram of a cassette player shown in FIG. 5A;

FIG. 6 is a detailed block diagram showing one embodiment of the main unit of the cassette player shown in FIG. 5B; and

FIG. 7 is a detailed block diagram showing another embodiment of the character information display unit shown in FIG. 5B.

A detailed description of a preferred embodiment of a cassette player having a detached character information display unit according to the present invention follows with reference to the accompanying drawings.

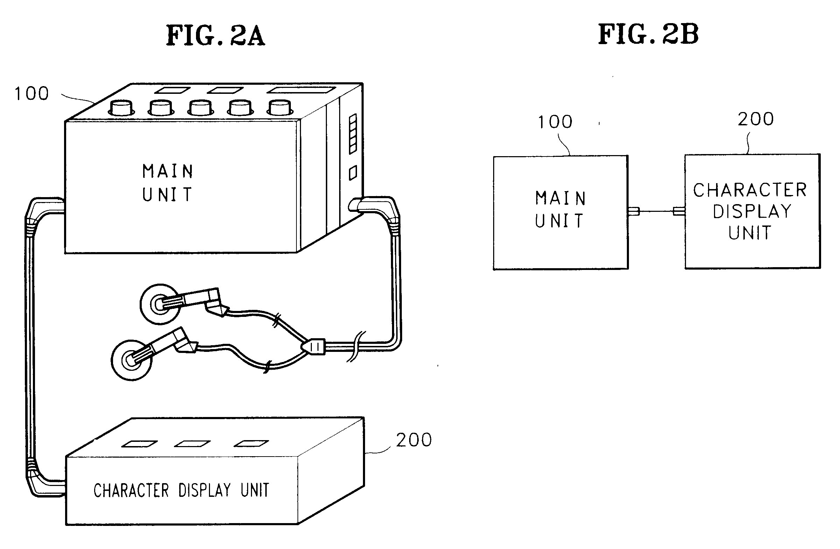

In FIG.2A, a cassette player having a detached character information display unit connected by wire to the main unit is shown and in FIG. 2B, a block diagram of the cassette player shown in FIG.2A is represented. Here, main unit 100 and character information display unit 200 of the cassette player are separated from each other and connected together by a wire jack.

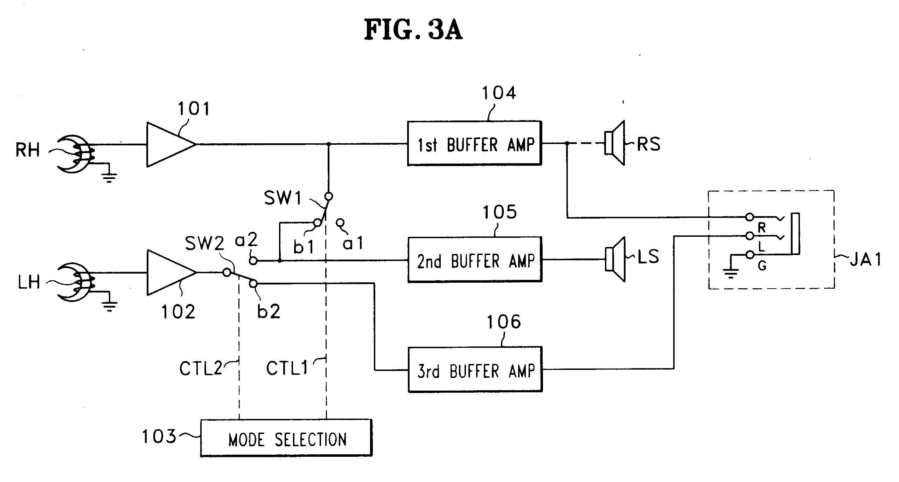

Referring to FIG. 3A, in a mono cassette player, right and left heads RH and LH are connected to first and second equalizers 101 and 102 to compensate degradation of a signal being reproduced and transmitted through the heads RH and LH.

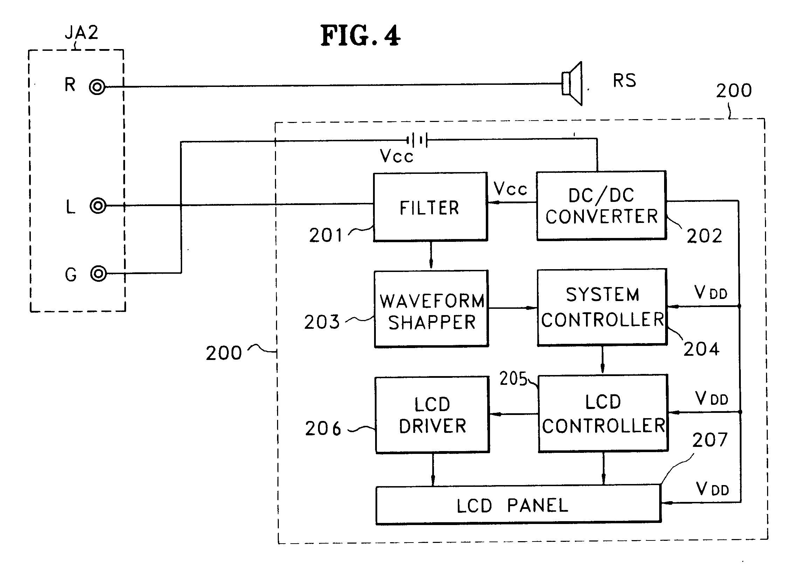

The output terminal of first equalizer 101 is connected in common to the input terminal of first buffer amplifier 104 and first control switch SW1. The output terminal of second equalizer 102 is connected to a stationary contact of second control switch SW2. second select contact b2 of second control switch SW2 is connected to the input terminal of third buffer amplifier 106. The input terminal of second buffer amplifier 105 is connected in common to a second select point b1 of first control switch SW1 and a first select point a2 of second control switch SW2. The first and second control signal output terminals of mode conversion section 103 are connected to the control contacts of the first and second control switches SW1 and SW2, respectively. The output terminal of first buffer amplifier 104 is connected to right speaker RS, and the right channel signal output terminal R of jack JA1 and the output terminal of second buffer amplifier 105 is connected to left speaker LS. The output terminal of the third buffer amplifier 106 is connected to a left channel signal output terminal L of jack JA1. Here, the mono cassette player has right speaker RS and left speaker LS, but actually, the music signal is a monophonic output. When jack JA1 is connected by wire to jack JA2 of FIG.4, main unit 100 and character information display unit 200 are physically separated from each other but electrically connected to each other.

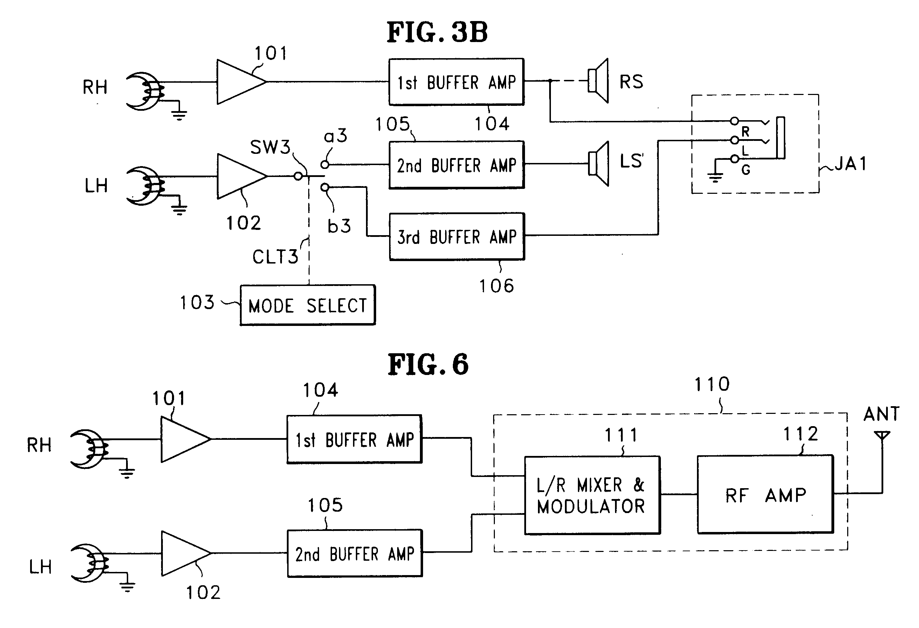

FIG. 3B is a detailed block diagram showing another embodiment of a main unit of a cassette player shown in FIG. 2B. Referring to FIG. 3B, in a stereo cassette player, first and second equalizers 101 and 102 are connected to right and left heads RH and LH, respectively and the output terminal of second equalizer 102 is connected to a stationary contact of third control switch SW3. The main unit of FIG.3B and is of the same construction as that of FIG.3A except for not having a mono/stereo selection switch, i.e. first control switch SW1. Here, when jack JA1 is connected to jack JA2 of FIG.4 by wire, the main unit and the character information display unit are physically separated from each other but electrically connected together by wire.

FIG. 4 is a detailed block diagram showing an embodiment of a character information display unit shown in FIG. 2B. Referring to FIG. 4, the right channel signal input terminal R of jack JA2 is connected to the right speaker RS and the left channel signal input terminal L is connected to the input terminal of filter 201. A ground terminal G is connected to the negative terminal of power supply source Vcc. The input terminal of DC/DC converter 202 is connected to the positive terminal of power supply source Vcc and the output terminals thereof are connected to power supply terminals of LCD panel 207, LCD control section 205, system control section 204 and filter 201, respectively.

The input terminal of waveform shaping section 203 is connected to the output terminal of filter 201 and the output terminal thereof is connected to the input terminal of system control section 204. The control signal input terminal of LCD control section 205 is connected to a system control section 204. The first control signal output terminal of LCD control section 205 is connected to a LCD driver section 206. The second control signal output terminal of LCD control section 205 and control signal output terminal of LCD driver section 206 are connected to LCD panel 207.

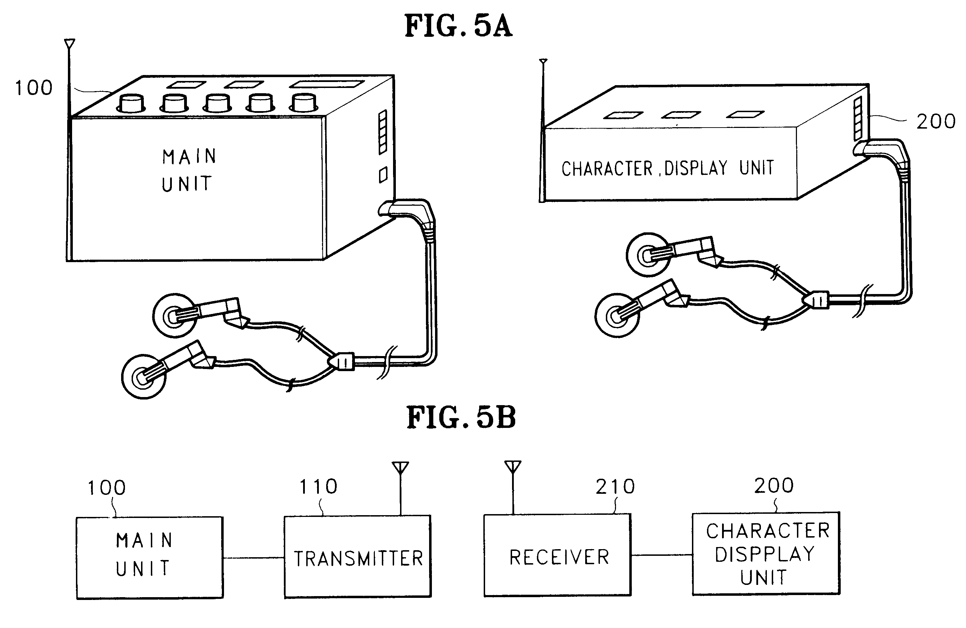

FIG. 5A pictorially represents a cassette player having a transmitter section 110 added to the main unit 110 and a receiver section 210 added to the character information unit 200 in which the separated character information display unit is connected to the main unit by radio. FIG. 5B shows the block diagram of a cassette player having a detached character information display unit that is linked to the main unit via radio shown in FIG.5A.

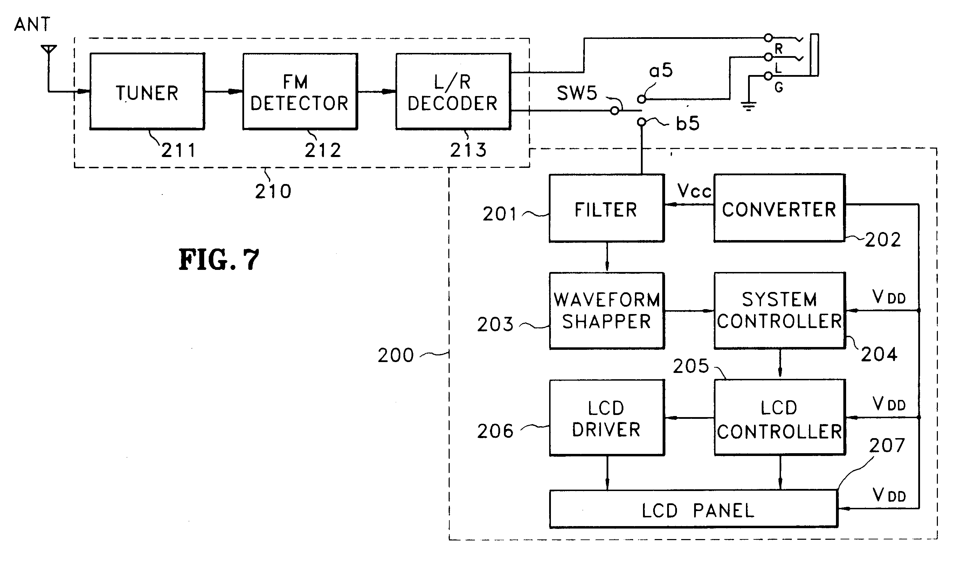

FIG. 6 is a detailed block diagram showing a main unit 100 with an added transmitter section 110 in a stereo cassette player having the structure shown FIG. 5A. Referring to FIG. 6, right and left heads RH and LH are connected to the input terminals of first and second equalizers 101 and 102, respectively. The output terminals of first and second equalizers 101 and 102 are connected to the input terminals of first and second buffer amplifiers 104 and 105, respectively. The first input terminal of L/R mixer and modulator 111 in transmitter section 110 is connected to the output terminal of first buffer amplifier 104 and the second input terminal thereof is connected to the output terminal of second buffer amplifier 105. The input terminal of RF amplifier 112 is connected to the output terminal of L/R mixer and modulator 111 and the output terminal thereof is connected to the antenna ANT. Here, main unit 100 having an added transmitter section 110 is physically separated but connected by radio to character information display unit 200 having an added receiver section 210 as shown in FIG.5B.

FIG. 7 is a detailed block diagram showing an embodiment of a character information display unit shown in FIG. 5B. Referring to FIG.7, a signal being transmitted from the transmitter section 110 included in the main unit of the cassette player as illustrated in FIG. 6, enters the input terminal of tuner 211 through antenna ANT and the output terminal of tuner 211 is connected to the input terminal of FM detector 212. To the output terminal of FM detector 212 is connected the input terminal of of L/R decoder 213 whose first output terminal is connected to right speaker RS and second output terminal is connected to a fifth control switch SW5. Thus, tuner 211, FM detector 212 and L/R decoder 213 form receiver section 210.

The construction of the character information display unit 200 of FIG.7 is the same as in FIG. 4 except that the fifth control switch SW5 enables first selection contact a5 which connects the left speaker to be switched to the second selection contact b5 to connect the filter 201 of the character information display unit 200 and the DC/DC converter 202 does not connect to a Vcc power supply of the main audio production unit.

A detailed explanation of the operation of a detached character information display unit of a cassette player according to the present invention follows. Referring to FIG. 3A, the main audio production unit 100 and character information display unit 200 are separated and connected by wire as shown in FIGs. 2A and 2B. When the signal being reproduced through the left and right heads LH and RH is an audio signal, first and second control switches SW1 and SW2 make contact with first contacts a1 and a2 to output the audio signal amplified through first and second buffer amplifiers 104 and 105 to right and left speakers RS and LS.

On the other hand, when the signal reproduced through the right head RH is an audio signal and the signal reproduced through the left head LH is character information, a conversion to a display mode takes place in the mode conversion section 103 to cause first and second control switches SW1 and SW2 to make contact with second select contacts b1 and b2 and the audio signal output from first equalizer 101 becomes output to left and right speakers LS and RS through first buffer amplifier 104 or through first control switch SW1 and second buffer amplifier 105. Then, left and right speakers LS and RS output a mono audio signal being reproduced through right head RH. In particular, first buffer amplifier 104 supplies an audio signal reproduced through the right head to right channel signal output terminal R of jack JA1. Character information output from second equalizer 102 traverses third buffer amplifier 106 and passes through left channel signal output terminal L of jack JA1 for transmission to character information display unit 200 as shown in FIG.4. At this point, mode conversion section 103 selects either a display mode or general mode.

Referring to FIG. 3B, audio signals are reproduced through the left and right heads LH and RH when a pure aural use audio tape is played back in a main unit 100 of an exclusive stereo cassette player in which the character information display unit 200 is detached from the main audio production unit and connected by wire as illustrated in FIGs. 2A and 2B. The third control switch SW3, under control of the mode conversion section 103, makes contact with first select contact point a3 to output L and R channel audio signals amplified through first and second buffer amplifiers 104 and 105 through left and right speakers LS and RS.

Meanwhile, when character information is loaded on a tape, the audio signal recorded on the right track becomes reproduced through right head RH and input to first buffer amplifier 104 via equalizer 101. Also, the character information recorded on the left track is reproduced through the left head LH and a conversion to a display mode takes place by means of a mode conversion section 103 to cause third control switch SW3 to make contact with second select contact b3 and thus, character information reproduced through left head LH is supplied to third buffer amplifier 106.

The audio signal of the right track having been amplified in first buffer amplifier 104 is supplied to right channel signal output terminal R of jack JA1 and in addition to being output to the earphone (not illustrated) is output to the right speaker RS, too. The character information of the left track having been amplified in third buffer amplifier 106 is supplied to left channel signal output terminal L of jack JA1 to transmit it for character information display unit 200 of FIG.4. Here, mode conversion section 103 selects either a display mode or a general mode.

FIG. 4 is a detailed block diagram of an embodiment of a character information display unit shown in FIG. 2B and as illustrated in FIGs. 3A and 3B, the character information display unit 200 is separated from the main unit 100 and connected thereto by wire. When reproducing a tape that has an audio signal on the right track and character information on the left track, the audio signal input through right channel signal input terminal R of jack JA2 is output through right speaker RS and the character information being input through left channel signal input terminal L is transmitted to filter 201 and the power supply source Vcc connected to ground terminal G of jack JA2 is applied to DC/DC converter 202.

A low pass band filter (not shown in the drawing) in filter section 201 removes noise accompanying the character information. Waveform shaping section 203 consists of a buffer and a transistor-transistor logic circuit TTL and shapes an analog signal having information "1" when an output signal of filter 201 is a 2.4 KHz signal and a 0 when it is a 1.2 KHz signal into a logic signal having a high or low level.

The system control section 204 controls LCD control section 205 and LCD driver section 206 in response to the output signal of waveform shaping section 203 to display a character signal on an LCD panel 207.

With reference to FIGs. 5A, 5B, 6 and 7, the operation will now be described for the case of a character information display unit 200 that is connected by radio to the main unit 100 of a cassette player. Here, the main unit 100 shown in FIGs.5A and 5B of a cassette player is an exclusive stereo cassette player and a stereo tape is engaged for use.

Referring to FIG. 6, in the case of reproducing an exclusive audio tape, left and right audio signals are applied through first and second buffer amplifiers 104 and 105 to L/R mixer and modulator 111. After the left and right channel audio signals are mixed and frequency-modulated in L/R mixer and modulator 111, they are transmitted through an RF amplifier 112 to an antenna ANT as a radio frequency (hereinafter referred to as "RF") signal.

In the case of a tape containing character information, the audio signal recorded on the right track passes through a first buffer amplifier 104 and the character information recorded on the left track passes a second buffer amplifier 105. Outputs of first and second amplifiers 104 and 105 enter L/R mixer and modulator 111. Then, the character information is an analog signal that has been FSK modulated by the binary data on the tape, namely, information of a "1" is modulated to a 2.4 KHz signal and information of a "0" to a 1.2 KHz signal. After mixing the character information of the left channel and audio signal of the right channel and frequency-modulating the mixed data in the L/R mixer and modulator 111, it is sent to RF amplifier 112. After the FM modulated signal is amplified in RF amplifier 112, it is transmitted as an RF signal through antenna ANT.

FIG. 7 is a detailed block diagram of another embodiment of a character information display unit shown in FIG.5B. Here, tuner 211 tunes to a prescribed channel signal and receives an RF signal through antenna ANT being transmitted from transmitter section 110 illustrated in FIG. 6. After the tuned signal of tuner 211 is converted to an intermediate frequency (hereinafter referred to as IF) in FM detector 212, it is supplied to L/R decoder 213. The L/R decoder 213 separates the IF signal of FM detector 212 into left and right channel signals. When the left and right channel signals are audio signals, the fifth control switch SW5 makes contact with first select contact a5 and the audio signals are output through the first and second output terminals of L/R decoder 213 to the left and right speakers or earphones.

When the signal reproduced by the left head LH during the display mode is character information, the fifth control switch SW5 makes contact with the second select contact b5 and the audio signal of the first output terminal of L/R decoder 213 is supplied to right speaker RS or the left and right earphones. The character information from the second output terminal of the L/R decoder 213 is applied to filter section 201. Noise included with the character information output from L/R decoder 213 is removed in filter 201. The output signal of filter 201 is shaped into a logic signal having a "high" or "low" level in waveform shaping section 203. Control of LCD control section 205 and LCD driver section 206 takes place in the system control section 204 in accordance with the signal output from waveform shaping section 203 to display character information on LCD panel 207. Specifically, when a signal that is switched by fifth selector switch SW5, i.e. a character information signal, is applied to the system control section, character information display unit 200 is initialized. Then, LCD control section 205 and LCD driver section 206 are turned on and characters from codes that correspond to the character information are reproduced and displayed on LCD panel 207.

Simultaneously, DC/DC converter 202 steps up the external power supply voltage of 1.5 volts to 5 volts to raise the range of the power supply voltage and applies it to filter 201, system control section 204, LCD control section 205 and LCD panel 207. This DC/DC converter 202 is a voltage booster device used in all cassette player models from the small to the large to meet the voltage requirements. For instance, if the voltage supplied from the DC/DC converter 202 falls below 5 volts, the processing speed of system control section 204 decreases and the contrast of the LCD panel 207 becomes weakened.

The character information display unit 200 that is detached from the main unit but linked by radio supplies it own power in the detached character information display unit as it is not able to receive power from the main unit and is driven by voltage that is raised in DC/DC converter 202.

As explained above, a detached character information display unit of a cassette player in accordance with the present invention is disclosed that uses a jack to connect the character information display unit for displaying the character information with the main unit by wire for reproducing audio and character information and by adding a transmitter section to the main unit and a receiver section to the character display unit, has the capability of connecting the character information display unit by radio with the main unit of a cassette player.

Additionally, the present invention has developed the 5x7 fonts LCD panel into a 16x16 fonts LCD panel to broaden the scope of use as a Karaoke product and a foreign language aid cassette translator by enabling expression in Korean, Chinese, Japanese and Arabic characters and is compatible with all acoustic products that are able to use a cassette tape such as a cassette player, music center, ordinary radio cassette and deck components.

## Claims

1.  A cassette player having a detached character information display unit wherein audio and character information signals are reproduced from an audio tape on which an audio signal has been recorded on a first track and character information has been recorded on a second track to output the reproduced audio signal through an audio output section and the reproduced character information through a character processing section on a flat panel display device, said cassette player comprising:

    a main unit of the cassette player; and

    a separate character information display including the character processing section, flat panel display device, speakers and a power supply section for supplying power to the character processing section, the flat panel display device and speakers and which is detached form the main unit of the cassette player, wherein the separate character information display unit is connected with the main unit by a wire jack and receives the reproduced character information signal and the audio signal, respectively.

2.  A cassette player as claimed in claim 1, wherein said flat panel display unit is of a liquid crystal display panel.

3.  A cassette player as claimed in claim 1, wherein said jack is used to connect to earphones.

4.  A cassette player having a detached type character information unit in which a main unit reproduces audio and character information signals from an audio tape on which audio signals have been recorded on a first track and character information signals have been recorded on a second track, to output the reproduced audio signal through an audio output section and to display the reproduced character information signal through a character processing section on a flat panel display device, said cassette player comprising:

    a main unit of said cassette player having a transmitter section for frequency-modulating the reproduced audio and character information signals and transmitting the frequency-modulated signals through an antenna; and

    a separate character information display unit having a receiver section for receiving and frequency-modulating the signals transmitted from said transmitter section, and separating and outputting the audio and character information signals, said character processing section and said flat panel display device for inputting and displaying the character information signals separated in said receiver section, a power supply section for supplying power to the receiver section, the character processing section and the flat panel display device, and an earphone connection jack for outputting the audio signals separated in said receiving section, wherein said separate character information display unit is detached from said main unit of said cassette player, and connected to said main unit by radio, thereby receiving the received character information and audio signals.

5. A cassette player as claimed in claim 5, wherein said flat panel display device is a liquid crystal display panel.

FIG.1B (PRIOR ART)

CHARACTER DISPLAY UNIT — 20

MAIN UNIT — 10

FIG.1A (PRIOR ART)

CHARACTER DISPLAY UNIT

10

20

# FIG. 2A

100

MAIN
UNIT

200

CHARACTER DISPLAY UNIT

# FIG. 2B

100

200

MAIN
UNIT

CHARACTER
DISPLAY
UNIT

EP 0 489 365 A1

FIG. 3A

## FIG. 3B

RH

101

1st BUFFER AMP    RS

104

105

SW3    a3

2nd BUFFER AMP    LS'

LH

102    b3

3rd BUFFER AMP

CLT3

106

103    MODE SELECT

R
L
G

JA1

## FIG. 6

RH

101    104

1st BUFFER AMP

110

111    112

L/R MIXER &
MODULATOR    RF AMP

ANT

LH

105

2nd BUFFER AMP

102

**FIG. 4**

EP 0 489 365 A1

# FIG. 5A

100

MAIN
UNIT

CHARACTER, DISPLAY UNIT

200

# FIG. 5B

| 100 | 110 | | 210 | 200 |
|---|---|---|---|---|
| MAIN UNIT | TRANSMITTER | | RECEIVER | CHARACTER DISPPLAY UNIT |

EP 0 489 365 A1

ANT

TUNER — 211
FM DETECTOR — 212
L/R DECODER — 213

210

**FIG. 7**

SW5  a5  R  L  G
b5

200

FILTER — 201
CONVERTER — 202  Vcc
WAVEFORM SHAPER — 203
SYSTEM CONTROLLER — 204  $V_{DD}$
205
LCD DRIVER — 206
LCD CONTROLLER — 205  $V_{DD}$
207
LCD PANEL  $V_{DD}$

EP 0 489 365 A1

14

| DOCUMENTS CONSIDERED TO BE RELEVANT | | | EP 91120504.5 | |
|---|---|---|---|---|
| Category | Citation of document with indication, where appropriate, of relevant passages | Relevant to claim | CLASSIFICATION OF THE APPLICATION (Int. Cl.5) | |
| Y | US - A - 4 864 550 (KAWANAKA) * Abstract; fig.; column 1, line 57 - column 2, line 23; claims 1,3 * -- | 1,2,4, 5 | G 11 B 23/44 G 11 B 31/00 | |
| P,Y | GB - A - 2 240 869 (BARCREST LIMITED) * Fig. 1; page 3, lines 1-13; claims 1,3,4 * -- | 1,2,4, 5 | | |
| A | US - A - 4 789 973 (MABUCHI) * Abstract; fig. 1,3; column 1, lines 26-50; claims * -- | 1,2,4, 5 | | |
| A | DE - A - 2 927 984 (BLAUPUNKT WERKE) * Abstract; page 16; fig. 1 * -- | 1 | TECHNICAL FIELDS SEARCHED (Int. Cl.5) | |
| A | FR - A - 2 616 952 (MPO DISQUES S.A.) * Abstract; fig.; claims * -- | 1,2,4, 5 | G 11 B 23/00 G 11 B 27/00 | |
| A | GB - A - 2 228 133 (HYUN MIN KIM) * Abstract; fig. 1; page 3, line 12 - page 4, line 9 * ---- | 1-5 | G 11 B 17/00 G 11 B 31/00 G 11 B 25/00 | |

The present search report has been drawn up for all claims

| Place of search | Date of completion of the search | Examiner |
|---|---|---|
| VIENNA | 25-02-1992 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document